# EUROPEAN PATENT SPECIFICATION

(11) **EP 3 106 559 B1**
(45) Date of publication and mention of the grant of the patent: **11.12.2019**
(21) Application number: 15749317.2
(22) Date of filing: 10.02.2015
(51) Int. Cl.: D06F 37/26, D06F 23/02

(54) **WASHING MACHINE**
WASCHMASCHINE
MACHINE À LAVER

(30) Priority: 13.02.2014 KR 20140016511
(43) Date of publication of application: 21.12.2016
(73) Proprietor: Samsung Electronics Co., Ltd., Suwon-si, Gyeonggi-do 443-742 (KR)
(72) Inventor: LEE, Jin Ho, Seoul 138-240 (KR); KIM, Jin Doo, Suwon-si Gyeonggi-do 443-390 (KR)
(74) Representative: Gulde & Partner
(86) International application number: PCT/KR2015/001331
(87) International publication number: WO 2015/122673

(56) References cited:
- EP-A1- 1 690 969
- WO-A1-2006/027149
- WO-A1-2007/017726
- DE-B3- 10 237 017
- DE-U1-202004 012 221
- JP-A- 2008 000 253
- JP-A- 2008 307 430
- JP-A- 2012 143 613
- KR-B1- 100 313 644
- KR-B1- 101 175 731

## Description

### [Technical Field]

Embodiments of the present disclosure relate to a washing machine, and more particularly, to a washing machine with an improved structure including a laundry-escape prevention unit for preventing laundry from escaping.

### [Background Art]

Generally, a washing machine is a device for washing laundry using water and detergent, and includes a cabinet, a tub for holding wash water used for washing inside the cabinet, a drum rotatably installed inside the tub, and a drive device for rotationally driving the drum.

Kinds of such a washing machine includes a drum washing machine in which a drum is horizontally disposed to wash laundry by lifting the laundry along an inner circumference of a tub and dropping the laundry when the drum rotates in forward and reverse directions with respect to a horizontal axis, and a vertical axis washing machine in which a drum provided with a pulsator therein is vertically disposed to wash laundry using streams of water generated by the pulsator when the drum rotates in forward and reverse directions with respect to a vertical axis.

In the drum washing machine, laundry may escape into an outer side of a drum in a spin-dry cycle. In order to prevent the laundry from escaping, a blocking preventer formed integrally with a diaphragm is provided, but there are problems in that a damage possibility may be high because the diaphragm includes a material having low strength and escaping of the laundry is not completely prevented.

### [Disclosure]

### [Technical Problem]

Therefore, in accordance with one aspect of the present disclosure, a washing machine is provided to include a laundry-escape prevention unit for preventing laundry from escaping into an external side of a drum during a spin-dry cycle.

Also, in accordance with another aspect of the present disclosure, a washing machine is provided to have an improved structure which prevents damage to a diaphragm due to rotation of a drum while laundry is being spin-dried.

### [Technical Solution]

In accordance with the invention, a washing machine includes a cabinet configured to include an opening for loading and retrieving laundry at one side surface of the cabinet, a tub configured to include an opening part corresponding to an opening of the cabinet at a front surface of the tub, and disposed inside the cabinet, a drum configured to include an opening part corresponding to an opening part of the tub at a front surface of the drum, and rotatably installed inside the tub, and a laundry-escape prevention unit configured to prevent the laundry from escaping from an inside of the drum, and coupled to the tub, wherein the laundry-escape prevention unit includes a guide member configured to include one side coupled to a front surface portion of the tub and the other side having a shape protruding toward a center of the opening of the cabinet, wherein the guide member includes: a first guide configured to extend from the tub toward the center of the opening, and a second guide configured to extend from one side of the first guide in an inward direction of the drum, wherein the first guide includes an upper surface facing the center of the opening, a first inclined surface forming a first incline angle with the upper surface and extending from one side of the upper surface when viewed from the center of the opening, and a second inclined surface forming a second incline angle with the upper surface and extending from the other side of the upper surface when viewed from the center of the opening, and the first incline angle is provided as greater than the second incline angle.

The guide member may be provided at a position separated leftward from an upper portion of the opening part of the tub by a first angle when viewed from the center of the opening.

The first angle may be provided as an acute angle.

The washing machine may further include a controller configured to control rotation of the drum, wherein the controller may be configured to control the drum to rotate in a counterclockwise direction during a spin-dry cycle when viewed from a front side of the drum.

The first inclined surface of the first guide may be disposed to the right of the upper surface when viewed from the center of the opening.

The second guide may have a shape in which a distance between both side surfaces of the second guide narrow from the one side of the first guide in the inward direction of the drum.

The washing machine may further include a diaphragm configured to seal a gap between the tub and the cabinet by connecting one side of the diaphragm to the opening part of the tub and connecting the other side of the diaphragm to the opening of the cabinet, wherein the guide member may include a material having strength greater than that of the diaphragm.

The laundry-escape prevention unit may further include a bracket configured to have a protrusion protruding toward a center of the opening between a front surface portion of the drum and the diaphragm.

The protrusion of the bracket may have a shape protruding more toward the center of the opening than the front surface portion of the drum.

The bracket may be provided to couple to one side of a front surface portion of the tub.

The protrusion of the bracket may be disposed behind the first guide when viewed from the front side of the washing machine.

### [Advantageous Effects]

The washing machine according to the present disclosure may prevent laundry from escaping into outside of a drum while the laundry is being spin-dried.

Also, the washing machine according to the present disclosure may prevent damage to a diaphragm due to rotation of the drum while the laundry is being spin-dried.

### [Description of Drawings]

FIG. 1 is a cross-sectional view illustrating a schematic configuration of a washing machine according to one embodiment of the present disclosure.
FIG. 2 is an exploded perspective view illustrating a configuration in which one embodiment of a laundry-escape prevention unit is coupled in the washing machine of FIG. 1 according to the present disclosure.
FIG. 3 is a front view of the laundry-escape prevention unit of FIG. 2.
FIG. 4 is a cross-sectional view illustrating a cross section of the coupled laundry-escape prevention unit of FIG. 2.
FIG. 5 is an enlarged view illustrating a configuration in which a guide member of FIG. 2 is coupled.
FIG. 6 is an enlarged view illustrating a first guide of the guide member of FIG. 5.
FIG. 7 is an enlarged view illustrating a second guide of the guide member of FIG. 5.
FIG. 8 is a perspective view of a bracket of FIG. 2.
FIG. 9 is a view illustrating a first modified example of the guide member of FIG. 1.
FIG. 10 is a view illustrating a second modified example of the guide member of FIG. 1.
FIG. 11 is a view illustrating a first modified example of the laundry-escape prevention unit of FIG. 1.

### [Modes of the Invention]

Hereinafter, embodiments of the present disclosure will be described in detail with reference to the accompanying drawings.

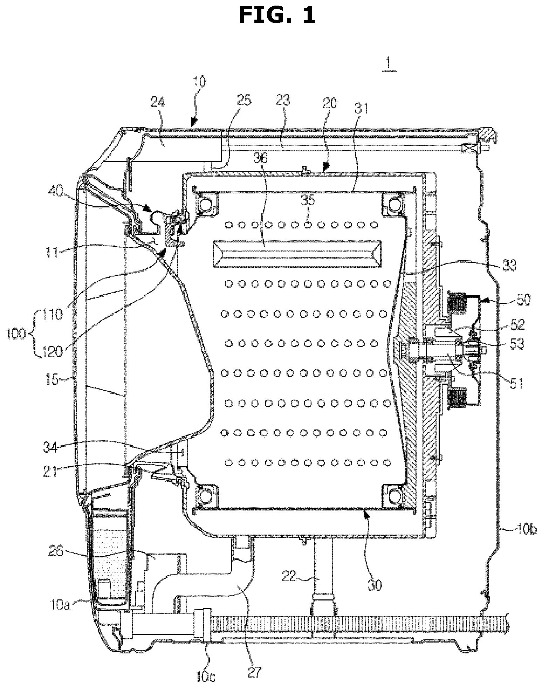

FIG. 1 is a cross-sectional view illustrating a schematic configuration of a washing machine according to one embodiment of the present disclosure.

With reference to FIG. 1, a washing machine 1 includes a cabinet 10, a tub 20, a drum 30, a diaphragm 40, a drive device 50, a controller (not shown), and a laundry-escape prevention unit 100.

The cabinet 10 forms an external appearance of the washing machine 1. The cabinet 10 includes a plurality of frames 10a, 10b, and 10c, and the plurality of frames 10a, 10b, and 10c are comprised of a front surface frame 10a forming a front surface of the cabinet 10, a side surface frame 10b forming side surfaces and a rear surface thereof, and a lower surface frame 10c forming a lower surface thereof.

An opening 11 is provided at a front surface portion of the cabinet 10 to enable laundry to be loaded into and retrieved from the drum 30. The opening 11 is opened and closed by a door 15 installed at the front surface of the cabinet 10. One side of the door 15 may be fixedly installed at the cabinet 10 and the door 15 may rotate centering on the one side thereof to open and close the opening 11.

A control panel (not shown) may be provided at a front upper portion of the cabinet 10. The control panel (not shown) may be provided to control a wash cycle, a rinse cycle, a spin-dry cycle, and the like. In addition, the control panel (not shown) may display information regarding a wash time, a wash course, and the like so as to enable a user to recognize them.

The tub 20 is disposed inside the cabinet 10. The tub 20 may be elastically supported by the cabinet 10. The tub 20 may be supported by the cabinet 10 through an elastic member (not shown) and a damping member 22. The elastic member (not shown) and the damping member 22 may reduce delivery of vibration and impact caused by the tub 20 to the cabinet 10. The elastic member (not shown) may be comprised of a member including a spring, and the damping member 22 may be comprised of a member including an oil damper.

The tub 20 may be provided in a cylindrical shape having an inner space. An opening part 21 corresponding to the opening 11 of the cabinet 10 is provided at a front surface portion of the tub 20. The opening part 21 provided at the front surface portion of the tub 20 may be disposed behind of the opening 11 of the cabinet 10.

A water supply tube 23 is provided at an upper portion of the tub 20 to supply washing water thereto. One side of the water supply tube 23 is connected to an external water source (not shown), and the other side thereof is connected to a detergent supply device 24.

The detergent supply device 24 is connected to the tub 20 through a connection tube 25. Water supplied from the water supply tube 23 is provided inside the tub 20 together with detergent via the detergent supply device 24.

A drain pump 26 and a drain tube 27 are disposed at a lower portion of the tub 20 to discharge water inside the cabinet 10 to an external side thereof.

The drum 30 is disposed inside the tub 20. The drum 30 includes a cylinder 31, a front surface plate 32 disposed in front of the cylinder 31, and a rear surface plate 33 disposed behind of the cylinder 31. An opening part 34 for loading and retrieving laundry is formed at the front surface plate 32, and a drive shaft 51 is formed at the rear surface plate 33 to deliver power from the drive device 50.

The drum 30 is rotatably provided inside the tub 20. The drum 30 may be supported by the tub 20 to alternately rotate in clockwise and counterclockwise directions. The drum 30 may rotate at a variable rotation speed.

The opening part 34 of the drum 30 is provided to correspond to the opening part 21 of the tub 20. The opening part 34 of the drum 30 may be disposed behind of the opening part 21 of the tub 20.

A plurality of through holes 35 for circulating washing water are formed at the drum 30. An inner space of the drum 30 may be in communication with the inner space of the tub 20 through the through holes 35.

A plurality of lifters 36 are provided at an inner circumference of the drum 30 so as to lift and drop laundry when the drum 30 rotates.

The diaphragm 40 is disposed between the cabinet 10 and the tub 20. One side of the diaphragm 40 is connected to the opening part 21 of the tub 20, and the other side thereof is connected to the opening 11 of the cabinet 10. The diaphragm 40 seals a gap between the opening 11 of the cabinet 10 and the opening part 21 of the tub 20. The diaphragm 40 prevents washing water inside the tub 20 from leaking to the external side of the cabinet 10.

The diaphragm 40 may be provided with a material having properties of high elasticity and superior expansion and contraction. The diaphragm 40 may include ethylene propylene diene monomer (EPDM). Consequently, the diaphragm 40 may reduce vibration being delivered to the cabinet 10 when the drum 30 rotates.

The drive shaft 51 is disposed between the drum 30 and the drive device 50. One end of the drive shaft 51 is connected to the rear surface plate 33 of the drum 30, and the other end thereof extends to an external side of a rear wall of the tub 20. When the drive device 50 drives the drive shaft 51, the drum 30 connected to the drive shaft 51 rotates centering thereon.

A bearing housing 52 is disposed at the rear wall of the tub 20 to rotatably support the drive shaft 51. The bearing housing 52 may be made of an aluminum alloy, and may be inserted into the rear wall of the tub 20 when the tub 20 is injection molded. A plurality of bearings 53 are disposed between the bearing housing 52 and the drive shaft 51 so that the driving shaft 51 may rotate smoothly.

During a wash cycle, the drive device 50 rotates the drum 30 at a low speed in forward and reverse directions, and laundry is repeatedly lifted and dropped in the drum 30 to eliminate contaminants from the laundry.

During a spin-dry cycle, the drive device 50 rotates the drum 30 at a high speed in one direction to separate water from the laundry by means of a centrifugal force applied thereto.

Hereinafter, the laundry-escape prevention unit 100 according to one embodiment of the present disclosure will be described. The laundry-escape prevention unit 100 may prevent laundry from escaping to an external side of the drum 30 during the spin-dry cycle.

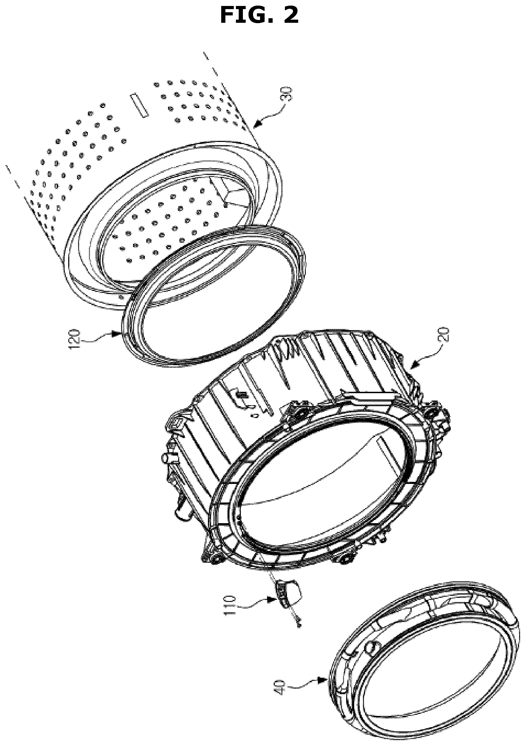

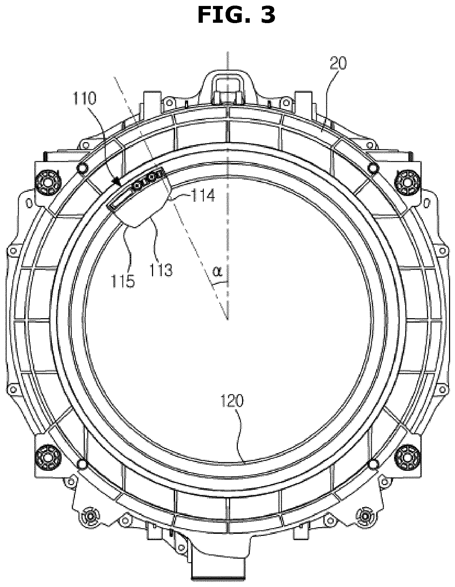

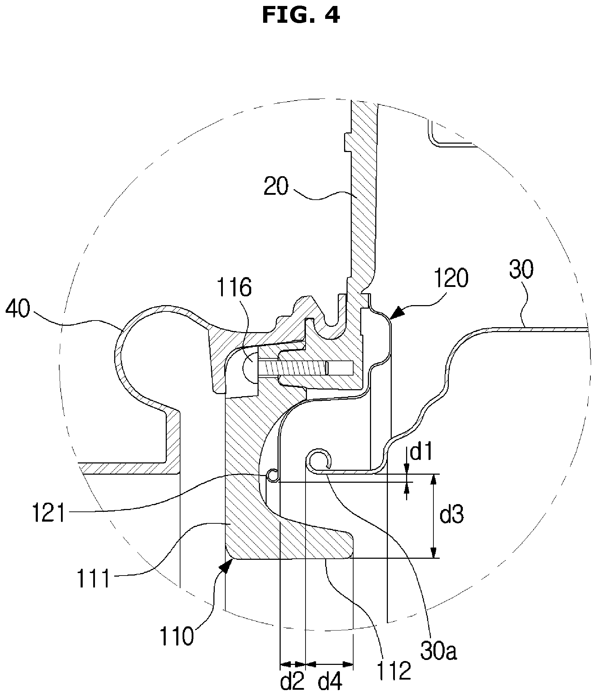

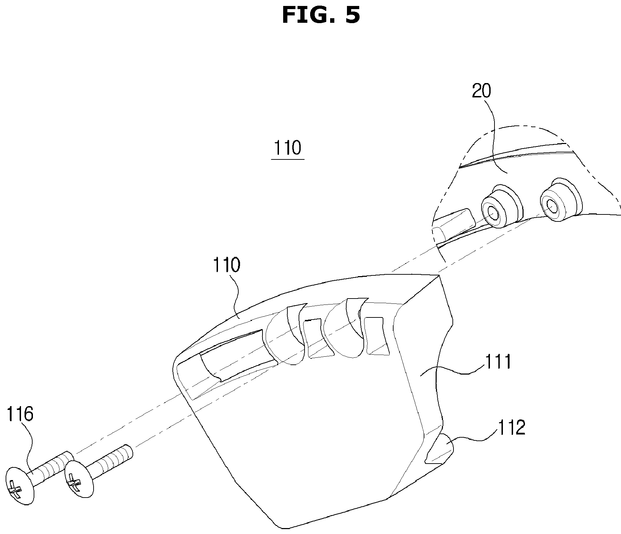

FIG. 2 is an exploded perspective view illustrating a configuration in which one embodiment of a laundry-escape prevention unit is coupled in the washing machine of FIG. 1, FIG. 3 is a front view of the laundry-escape prevention unit of FIG. 2, FIG. 4 is a cross-sectional view illustrating a cross section of the coupled laundry-escape prevention unit of FIG. 2, and FIG. 5 is an enlarged view illustrating a configuration in which a guide member of FIG. 2 is coupled.

With reference to FIGS. 2 to 5, the laundry-escape prevention unit 100 according to one embodiment of the present disclosure may include a guide member 110 and a bracket 120.

According to the invention, one side of the guide member 110 is coupled to one side of the front surface portion of the tub 20, and the other side thereof has a shape protruding toward the center of the opening 11 of the cabinet 10.

As shown in FIG. 3, the guide member 110 may be disposed at a position separated leftward from an upper portion of the opening part 21 of the tub 20 by a first angle α when viewed from a center of the opening 11. The first angle α may be provided as an acute angle. According to one example, the first angle α may be provided to be in the range of 45° to 60°.

According to the invention, the guide member 110 includes a first guide 111 and a second guide 112.

The first guide 111 is provided to extend from the tub 20 in a central direction of the opening 11 of the cabinet 10. As shown in FIG. 4, the first guide 111 may have a shape extending more toward the center of the opening 11 by as much as a third distance d3 than a front surface portion 30a of the drum 30. According to one example, the third distance d3 may be provided to be in the range of 15 to 20 mm.

One side of the first guide 111 is provided to be coupled to an outer surface of the front surface portion of the tub 20. The first guide 111 may be fixedly coupled to the outer surface of the front surface portion of the tub 20 through a screw coupler 116.

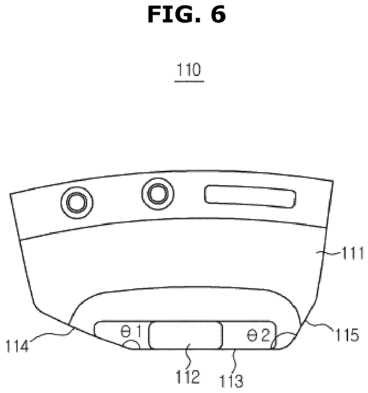

FIG. 6 is an enlarged view of a first guide of the guide member of FIG. 5.

With reference to FIGS. 2 to 6, the first guide 111 includes an upper surface 113, a first inclined surface 114 forming a first incline angle θ1 with the upper surface 113 and extending from one side thereof, and a second inclined surface 115 forming a second incline angle θ2 with the upper surface 113 and extending from the other side thereof.

Hereinafter, the upper surface 113 of the first guide 111 is defined as a surface facing the center of the opening 11. According to one example, the first inclined surface 114 may be disposed at a right side of the upper surface 113 when viewed from the center of the opening 11. The first incline angle θ1 formed between the upper surface 113 and the first inclined surface 114 is provided as greater than the second incline angle θ2 formed between the upper surface 113 and the second inclined surface. In particular, the first incline angle θ1 may be provided to be 140°.

According to one example, the second inclined surface 115 may be disposed at a left side of the upper surface 113 when viewed from the center of the opening. The second angle θ2 formed between the upper surface 113 and the second inclined surface 115 is provided as less than the first angle θ1 formed between the upper surface 113 and the first inclined surface 114. At this point, the second angle θ2 formed between the upper surface 113 and the second inclined surface 115 may be provided to be 110°.

On the other hand, although not shown in the drawings, the first angle θ1 of the first guide 111 may be provided as less than the second angle θ2 of the second guide 112. Also, the guide member 110 may be disposed at a position separated rightward from the upper portion of the opening part 21 of the tub 20 by the first angle θ1 when viewed from the center of the opening 11. In this case, during the spin-dry cycle, the controller (not shown) may control the drum 30 to rotate in the clockwise direction when viewed from the front side of the drum 30.

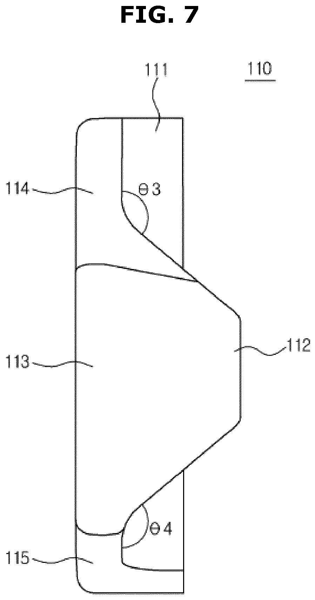

FIG.7 is an enlarged view of a second guide of the guide member of FIG. 5.

With reference to FIGS. 2 to 7, the second guide 112 is provided to extend from one side of the first guide 111 in an inward direction of the drum 30. According to one example, the second guide 112 may extends to a position at which some portions are overlapped with the opening part 34 of the drum 30 when viewed from the center of the opening 11. In particular, the second guide 112 may have a shape extending from the front surface portion 30a of the drum 30 in a rear direction thereof by as much as a fourth distance d4 when viewed from the center of the opening 11. According to one example, the fourth distance d4 may be provided to be 10 mm.

According to one example, the second guide 112 may have a shape in which a distance between both side surfaces of the second guide 112 narrow from the one side of the first guide 111 in the inward direction of the drum 30. A left surface of the second guide 112 may be provided to form a third angle θ3 with the first guide 111, and a right surface thereof may be provided to form a fourth angle θ4 with the first guide 111. At this point, the third angle θ3 and the fourth angle θ4 may be provided to be identical to each other. According to one example, the third angle θ3 and the fourth angle θ4 may be provided to be 130°.

In the washing machine 1 including the guide member 110 described above, the controller (not shown) may control the drum 30 to rotate in the counterclockwise direction when viewed from the front side of the drum 30 during the spin-dry cycle.

According to one example, the guide member 110 may include a material having strength greater than that of the diaphragm 40. The guide member 110 may include a material having strength which maintains a certain shape even while in contact with rotating laundry during the spin-dry cycle.

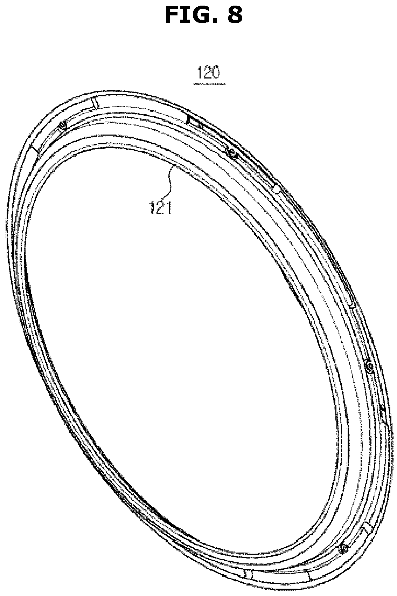

FIG. 8 is a perspective view of a bracket of FIG. 2.

With reference FIGS, 2 to 4 and FIG. 8, the bracket 120 according to one embodiment of the present disclosure may be provided in a ring shape having a hollow. The bracket 120 may be coupled to and installed at one side of the tub 20. The bracket 120 may be coupled to and installed at a rear side of the front surface of the tub 20.

According to one example, the bracket 120 includes a protrusion 121. As shown in FIG. 4, the protrusion 121 may have a shape protruding toward the center of the opening 11 between the front surface portion 30a of the drum 30 and the diaphragm 40.

According to one example, the protrusion 121 may be provided in a shape extending more toward the center of the opening 11 by as much as the first distance d1 than the front surface portion 30a of the drum 30. At this point, the first distance d1 may be provided be 3 mm or less.

According to one example, the protrusion 121 may be disposed in front of the front surface portion 30a of the drum 30 by the second distance d2. The second distance d2 may be provided to be in the range of 3 to 6 mm. The protrusion 121 may be provided to maintain a gap by as much as the second distance d2 between the drum 30 and the protrusion 121 during the wash cycle or the spin-dry cycle. Consequently, the bracket 120 may prevent the diaphragm 40 and the drum 30 from coming in contact with each other when the drum 30 rotates.

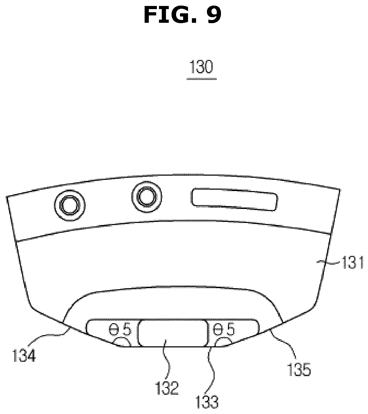

FIG. 9 is a view illustrating a first modified example of the guide member of FIG. 1.

With reference to FIG. 9, a guide member 130 not forming part of the present invention may include a first guide 131 and a second guide 132. In comparison with the guide member 110 of FIG. 3, the guide member 130 has a different configuration only regarding the first guide 131. Hereinafter, a difference compared to the guide member 110 of FIG. 3 will be focused on and described.

The first guide 131 may include an upper surface 133, a first inclined surface 134, and a second inclined surface 135. According to one example, the first inclined surface 134 may form a fifth incline angle θ5 with the upper surface 133 and may have a shape extending from one side of the upper surface 133. In addition, the second inclined surface 135 may form the fifth incline angle θ5 with the upper surface 133 and may have a shape extending from the other side of the upper surface 133. Unlike the guide member 110 of FIG. 3, the first guide 131 may be provided so that both sides of the inclined surfaces of the upper surface 133 have the same incline angle.

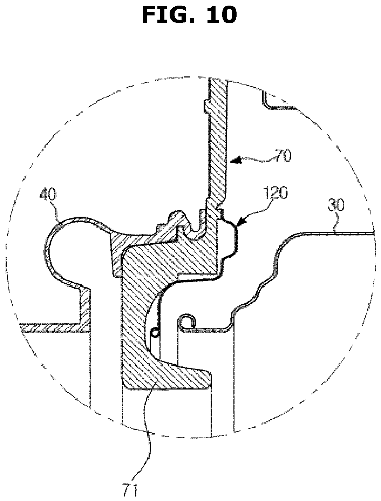

FIG. 10 is a view illustrating a second modified example of the guide member of FIG. 1.

With reference to FIG. 10, a guide member 71 may be integrally provided with a tub 70. According to one example, the tub 70 may be manufactured in a shape including the guide member 71 at one side of a front surface portion of the tub 70. Therefore, unlike the guide member 110 of FIG. 3, the guide member 71 may be provided at a predetermined position without being coupled through a screw and the like.

Besides the difference described above, a shape, a position, and a function of the guide member 71 are the same as those of the guide member 110 of FIG. 3 such that a description thereof will be omitted.

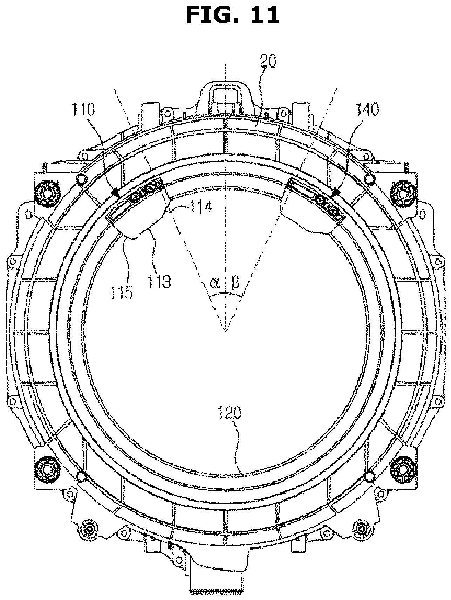

FIG. 11 is a view illustrating a first modified example of the laundry-escape prevention unit of FIG. 1.

With reference to FIG. 11, the laundry-escape prevention unit includes guide members 110 and 140 and the bracket 120.

According to one example, a plurality of the guide members 110 and 140 may be provided. The guide members 110 and 140 may include the first guide member 110 and a second guide member 140. The first guide member 110 is the same as the guide member 110 of FIG. 3 such that a description thereof will be omitted.

The second guide member 140 may be disposed at a position separated rightward from the upper portion of the opening part 21 of the tub 20 by a second angle β when viewed from the center of the opening 11. The second angle β may be provided as an acute angle. The second angle β may be provided to be in the range of 45° to 60°. Alternatively, the second angle β may be provided to be the same as the first angle α.

Hereinafter, a process for preventing laundry from escaping during a spin-dry cycle in the washing machine 1 including the laundry-escape prevention unit 100 according to one embodiment of the present disclosure will be described.

The washing machine 1 performs a spin-dry cycle after a wash cycle is completed. Before performing the spin-dry cycle, the drum 30 rotates at a low speed by alternating a direction in clockwise and counterclockwise directions. At this point, when some of laundry is moved to the outer side of the drum 30 while the laundry is rotated, the laundry-escape prevention unit 100 may come in contact with the laundry to prevent the laundry from escaping to the outer side of the drum 30.

The drum 30 rotates at a high speed in one direction to perform the spin-dry cycle. In the washing machine 1 described above, since the guide member 110 is disposed at the position separated leftward from the upper portion of the opening part of the tub 20 when viewed from the center of the opening 11, the drum 30 may rotate in the counterclockwise direction to spin-dry the laundry.

During the spin-dry cycle, some of the laundry may be moved in front of the opening part of the drum 30. The laundry placed at the opening part of the drum 30 is rotated together therewith to come in contact with the guide member 110. In particular, the laundry comes in contact with the first guide 111 of the guide member 110 and then sequentially comes in contact with the first inclined surface 114 and the second guide 112. At this point, the laundry is moved inside the drum 30 due to impacts from the first guide 111 and the second guide 112. Here, the first inclined surface 114 of the first guide 111 forms the first incline angle θ1 with the upper surface 113, such that it may more effectively prevent the laundry from being moved outside of the drum 30.

Also, in a course of spin-drying the laundry in the counterclockwise direction, the laundry may come in contact with the guide member 110 in a separated state from an internal surface of the drum 30 due to gravity when passing the upper portion of the drum 30. As a result, this may effectively prevent the laundry from being moved outside the drum 30 to move the laundry therein.

In addition, the protrusion 121 of the bracket 120 may prevent laundry, which has a volume less than that of the laundry prevented by the guide member 110 described above, from being moved in front of the opening part of the drum 30. In particular, while the laundry is rotated together with the drum 30, some of the laundry may be moved outside of the opening part of the drum 30 to come in contact with the protrusion 121 of the bracket 120 fixedly installed at the tub 20. When the rotating laundry is in contact with the protrusion 121 of the bracket 120 which is stopped, the laundry is moved inside the drum 30 due to an impact caused by the contact.

As described above, the laundry-escape prevention unit 100 may effectively prevent the laundry from being moved outside of the opening part of the drum 30 during the spin-dry cycle using the guide member 110 and the bracket 120.

Although the embodiments have been described with reference to a number of illustrative embodiments thereof, it should be understood that numerous other modifications and embodiments can be devised by those skilled in the art that fall within the scope of this disclosure, as defined by the appended claims. The embodiments, disclosed herein, therefore, are not to be taken in a sense of limiting the technical concept of the present invention but as an explanation thereof, and the range of the technical concept is not limited to these embodiments. The scope of the present invention should be construed by the appended claims.

## Claims

1. A washing machine (1) comprising:
a cabinet (10) configured to include an opening (11) for loading and retrieving laundry at one side surface of the cabinet (10);
a tub (20, 70) configured to include an opening part (21) corresponding to an opening (11) of the cabinet (10) at a front surface of the tub (20, 70), and disposed inside the cabinet (10);
a drum (30) configured to include an opening part (34) corresponding to an opening part (21) of the tub (20, 70) at a front surface of the drum (30), and rotatably installed inside the tub (20, 70); and
a laundry-escape prevention unit (100) configured to prevent the laundry from escaping from an inside of the drum (30), and coupled to the tub (20, 70),
wherein the laundry-escape prevention unit (100) includes a guide member (110) configured to include one side coupled to a front surface portion of the tub (20, 70) and the other side having a shape protruding toward a center of the opening (11) of the cabinet (10),
wherein the guide member (110) includes:
a first guide (111, 131) configured to extend from the tub (20, 70) toward the center of the opening (11); and
a second guide (112, 132) configured to extend from one side of the first guide (111, 131) in an inward direction of the drum (30),
**characterized in that**
the first guide (111, 131) includes an upper surface (113, 133) facing the center of the opening (11), a first inclined surface (114, 134) forming a first incline angle (θ1) with the upper surface (113, 133) and extending from one side of the upper surface (113, 133) when viewed from the center of the opening (11), and a second inclined surface (115, 135) forming a second incline angle (θ2) with the upper surface (113, 133) and extending from the other side of the upper surface (113, 133) when viewed from the center of the opening (11), and the first incline angle (θ1) is provided as greater than the second incline angle (θ2).

2. The washing machine (1) of claim 1, wherein the guide member (110) is provided at a position separated leftward from an upper portion of the opening part (21) of the tub (20, 70) by a first angle (α) when viewed from the center of the opening.

3. The washing machine (1) of claim 2, wherein the first angle (α) is provided as an acute angle.

4. The washing machine (1) of claim 3, further comprising:
a controller configured to control rotation of the drum (30),
wherein the controller is configured to control the drum (30) to rotate in a counterclockwise direction during a spin-dry cycle when viewed from a front side of the drum (30).

5. The washing machine (1) of claim 1, wherein the second guide (112, 132) has a shape in which a distance between both side surfaces of the second guide (112, 132) narrow from the one side of the first guide (111, 131) in the inward direction of the drum (30).

6. The washing machine (1) of claim 5, wherein the first inclined surface (114, 134) of the first guide (111, 131) is disposed to the right of the upper surface (113, 133) when viewed from the center of the opening.

7. The washing machine (1) of claim 1, further comprising:
a diaphragm (40) configured to seal a gap between the tub (20, 70) and the cabinet (10) by connecting one side of the diaphragm (40) to the opening part (21) of the tub (20, 70) and connecting the other side of the diaphragm (40) to the opening (11) of the cabinet (10).

8. The washing machine (1) of claim 7, wherein the guide member (110) includes a material having strength greater than that of the diaphragm (40).

9. The washing machine (1) of claim 7, wherein the laundry-escape prevention unit (100) includes a bracket (120) configured to include a protrusion (121) protruding toward a center of the opening between a front surface portion (30a) of the drum (30) and the diaphragm (40).

10. The washing machine (1) of claim 9, wherein the protrusion (121) of the bracket (120) is disposed behind the first guide (111, 131) when viewed from the front side of the washing machine (1).

11. The washing machine (1) of claim 10, wherein the protrusion (121) of the bracket (120) has a shape protruding more toward the center of the opening than the front surface portion (30a) of the drum (30).

12. The washing machine (1) of claim 11, wherein the bracket (120) is provided to couple to one side of the front surface portion of the tub (20, 70).

## Patentansprüche

1. Waschmaschine (1), umfassend:
ein Gehäuse (10), das dazu ausgestaltet ist, eine Öffnung (11) zum Hineingeben und Entnehmen von Wäsche an einer Seitenfläche des Gehäuses (10) zu enthalten;
einen Bottich (20, 70), der dazu ausgestaltet ist, an einer Frontfläche des Bottichs (20, 70) einen Öffnungsteil (21) zu enthalten, der einer Öffnung (11) des Gehäuses (10) entspricht, und im Inneren des Gehäuses (10) angeordnet ist;
eine Trommel (30), die dazu ausgestaltet ist, an einer Frontfläche der Trommel (30) einen Öffnungsteil (34) zu enthalten, der einem Öffnungsteil (21) des Bottichs (20, 70) entspricht, und im Inneren des Bottichs (20, 70) drehbar installiert ist; und
eine Wäscheaustrittsverhinderungseinheit (100), die dazu ausgestaltet ist, die Wäsche an dem Austreten aus einem Inneren der Trommel (30) zu hindern, und die mit dem Bottich (20, 70) gekoppelt ist,
wobei die Wäscheaustrittsverhinderungseinheit (100) ein Führungselement (110) enthält, das dazu ausgestaltet ist, eine Seite zu enthalten, die mit einem Frontflächenabschnitt des Bottichs (20, 70) gekoppelt ist, und wobei die andere Seite eine Form aufweist, die in Richtung einer Mitte der Öffnung (11) des Gehäuses (10) vorsteht,
wobei das Führungselement (110) Folgendes enthält:
eine erste Führung (111, 131), die dazu ausgestaltet ist, sich von dem Bottich (20, 70) aus in Richtung der Mitte der Öffnung (11) zu erstrecken; und
eine zweite Führung (112, 132), die dazu ausgestaltet ist, sich von einer Seite der ersten Führung (111, 131) aus in Innenrichtung der Trommel (30) zu erstrecken,
**dadurch gekennzeichnet, dass**
die erste Führung (111, 131) eine obere Fläche (113, 133), die zur Mitte der Öffnung (11) weist, eine erste geneigte Fläche (114, 134), die mit der oberen Fläche (113, 133) einen ersten Neigungswinkel (θ1) bildet und sich von der Mitte der Öffnung (11) betrachtet von einer Seite der oberen Fläche (113, 133) aus erstreckt, und eine zweite geneigte Fläche (115, 135) enthält, die mit der oberen Fläche (113, 133) einen zweiten Neigungswinkel (θ2) bildet und sich von der Mitte der Öffnung (11) betrachtet von der anderen Seite der oberen Fläche (113, 133) aus erstreckt, und der erste Neigungswinkel (θ1) als größer als der zweite Neigungswinkel (θ2) vorgesehen ist.

2. Waschmaschine (1) nach Anspruch 1, wobei das Führungselement (110) an einer Position vorgesehen ist, die von der Mitte der Öffnung betrachtet von einem oberen Abschnitt des Öffnungsteils (21) des Bottichs (20, 70) aus nach links durch einen ersten Winkel (α) getrennt ist.

3. Waschmaschine (1) nach Anspruch 2, wobei der erste Winkel (α) als spitzer Winkel vorgesehen ist.

4. Waschmaschine (1) nach Anspruch 3, ferner umfassend:
eine Steuerung, die dazu ausgestaltet ist, die Drehung der Trommel (30) zu steuern,
wobei die Steuerung dazu ausgestaltet ist, die Trommel (30) zu steuern, sich während eines Schleudergangs von einer Frontseite der Trommel (30) betrachtet in einer Richtung gegen den Uhrzeigersinn zu drehen.

5. Waschmaschine (1) nach Anspruch 1, wobei die zweite Führung (112, 132) eine Form aufweist, in der ein Abstand zwischen beiden Seitenflächen der zweiten Führung (112, 132) sich von der einen Seite der ersten Führung (111, 131) aus in Innenrichtung der Trommel (30) verengt.

6. Waschmaschine (1) nach Anspruch 5, wobei die erste geneigte Fläche (114, 134) der ersten Führung (111, 131) von der Mitte der Öffnung betrachtet rechts von der oberen Fläche (113, 133) angeordnet ist.

7. Waschmaschine (1) nach Anspruch 1, ferner umfassend:
eine Membran (40), die dazu ausgestaltet ist, einen Spalt zwischen dem Bottich (20, 70) und dem Gehäuse (10) abzudichten, indem eine Seite der Membran (40) mit dem Öffnungsteil (21) des Bottichs (20, 70) verbunden wird und die andere Seite der Membran (40) mit der Öffnung (11) des Gehäuses (10) verbunden wird.

8. Waschmaschine (1) nach Anspruch 7, wobei das Führungselement (110) ein Material mit einer Festigkeit enthält, die größer ist als die der Membran (40).

9. Waschmaschine (1) nach Anspruch 7, wobei die Wäscheaustrittsverhinderungseinheit (100) eine Halterung (120) enthält, die dazu ausgestaltet ist, einen Vorsprung (121) zu enthalten, der in Richtung einer Mitte der Öffnung zwischen einem Frontflächenabschnitt (30a) der Trommel (30) und der Membran (40) vorsteht.

10. Waschmaschine (1) nach Anspruch 9, wobei der Vorsprung (121) der Halterung (120) von der Frontseite der Waschmaschine (1) betrachtet hinter der ersten Führung (111, 131) angeordnet ist.

11. Waschmaschine (1) nach Anspruch 10, wobei der Vorsprung (121) der Halterung (120) eine Form aufweist, die mehr in Richtung der Mitte der Öffnung vorsteht als der Frontflächenabschnitt (30a) der Trommel (30).

12. Waschmaschine (1) nach Anspruch 11, wobei die Halterung (120) dazu vorgesehen ist, mit einer Seite des Frontflächenabschnitts des Bottichs (20, 70) gekoppelt zu werden.

## Revendications

1. Machine à laver (1) comprenant :
une carrosserie (10) configurée pour comporter une ouverture (11) pour charger et retirer du linge à laver au niveau d'une surface latérale de la carrosserie (10) ;
une cuve (20, 70) configurée pour comporter une partie d'ouverture (21) correspondant à une ouverture (11) de la carrosserie (10) au niveau d'une surface frontale de la cuve (20, 70), et disposée à l'intérieur de la carrosserie (10) ;
un tambour (30) configuré pour comporter une partie d'ouverture (34) correspondant à une partie d'ouverture (21) de la cuve (20, 70) au niveau d'une surface frontale du tambour (30), et installé rotatif à l'intérieur de la cuve (20, 70) ; et
une unité (100) destinée à empêcher une fuite du linge, configurée pour empêcher le linge de s'échapper d'un intérieur du tambour (30), et couplée à la cuve (20, 70),
dans laquelle l'unité (100) destinée à empêcher une fuite du linge comporte un élément formant guide (110) configuré pour comporter un côté couplé à une portion de surface frontale de la cuve (20, 70) et l'autre côté présentant une forme qui fait saillie vers un centre de l'ouverture (11) de la carrosserie (10),
dans laquelle l'élément formant guide (110) comporte :
un premier guide (111, 131) configuré pour s'étendre depuis la cuve (20, 70) vers le centre de l'ouverture (11) ; et
un second guide (112, 132) configuré pour s'étendre depuis un côté du premier guide (111, 131) dans une direction vers l'intérieur du tambour (30),
**caractérisée en ce que**
le premier guide (111, 131) comporte une surface supérieure (113, 133) faisant face au centre de l'ouverture (11), une première surface inclinée (114, 134) formant un premier angle d'inclinaison (θ1) avec la surface supérieure (113, 133) et s'étendant depuis un côté de la surface supérieure (113, 133) lorsqu'on regarde à partir du centre de l'ouverture (11), et une seconde surface inclinée (115, 135) formant un second angle d'inclinaison (θ2) avec la surface supérieure (113, 133) et s'étendant depuis l'autre côté de la surface supérieure (113, 133) lorsqu'on regarde à partir du centre de l'ouverture (11), et le premier angle d'inclinaison (θ1) est prévu plus grand que le second angle d'inclinaison (θ2).

2. Machine à laver (1) selon la revendication 1, dans laquelle l'élément formant guide (110) est prévu au niveau d'une position séparée vers la gauche par rapport à une portion supérieure de la partie d'ouverture (21) de la cuve (20, 70) par un premier angle (α) lorsqu'on regarde à partir du centre de l'ouverture.

3. Machine à laver (1) selon la revendication 2, dans laquelle le premier angle (α) est prévu sous la forme d'un angle aigu.

4. Machine à laver (1) selon la revendication 3, comprenant en outre :
un moyen de commande configuré pour commander la rotation du tambour (30), dans laquelle le moyen de commande est configuré pour commander le tambour (30) afin de tourner dans le sens inverse des aiguilles d'une montre pendant un cycle d'essorage-séchage lorsqu'on regarde à partir d'un côté frontal du tambour (30).

5. Machine à laver (1) selon la revendication 1, dans laquelle le second guide (112, 132) présente une forme dans laquelle une distance entre les deux surfaces latérales du second guide (112, 132) se rétrécit à partir d'un côté du premier guide (111, 131) dans la direction vers l'intérieur du tambour (30).

6. Machine à laver (1) selon la revendication 5, dans laquelle la première surface inclinée (114, 134) du premier guide (111, 131) est disposée vers la droite de la surface supérieure (113, 133) lorsqu'on regarde à partir du centre de l'ouverture.

7. Machine à laver (1) selon la revendication 1, comprenant en outre :
un diaphragme (40) configuré pour sceller un vide entre la cuve (20, 70) et la carrosserie (10) en reliant un côté du diaphragme (40) à la partie d'ouverture (21) de la cuve (20, 70) et en reliant l'autre côté du diaphragme (40) à l'ouverture (11) de la carrosserie (10).

8. Machine à laver (1) selon la revendication 7, dans laquelle l'élément formant guide (110) comporte un matériau présentant une résistance supérieure à celle du diaphragme (40).

9. Machine à laver (1) selon la revendication 7, dans laquelle l'unité (100) destinée à empêcher une fuite du linge comporte un support (120) configuré pour comporter une saillie (121) faisant saillie vers un centre de l'ouverture entre une portion de surface frontale (30a) du tambour (30) et le diaphragme (40).

10. Machine à laver (1) selon la revendication 9, dans laquelle la saillie (121) du support (120) est disposée derrière le premier guide (111, 131) lorsqu'on regarde à partir du côté frontal de la machine à laver (1).

11. Machine à laver (1) selon la revendication 10, dans laquelle la saillie (121) du support (120) présente une forme qui fait plus saillie vers le centre de l'ouverture que la portion de surface frontale (30a) du tambour (30).

12. Machine à laver (1) selon la revendication 11, dans laquelle le support (120) est prévu pour se coupler à un côté de la portion de surface frontale de la cuve (20, 70).
